# EUROPEAN PATENT APPLICATION

(11) **EP 3 916 919 A1**
(43) Date of publication of application: **01.12.2021**
(21) Application number: 21174335.6
(22) Date of filing: 18.05.2021
(51) Int. Cl.: H01R 4/02, H01R 43/02, B23K 15/00

(54) **CONDUCTOR CONNECTING STRUCTURE**

(30) Priority: 27.05.2020 JP 2020091962
(71) Applicant: Yazaki Corporation, Minato-ku Tokyo 108-8333 (JP)
(72) Inventor: Tanaka, Hiroyuki, Kakegawa-shi, 437-1421 (JP); Mizuno, Hideki, Kakegawa-shi, 437-1421 (JP)
(74) Representative: Hoffmann Eitle

(57) **Abstract**

An objective of the present invention is to provide a conductor connecting structure which may enable miniaturization in the height direction. A conductor connecting structure 1 is intended for connecting a conductor 3 to an electric wire 2 with a plurality of strands 21, wherein the conductor 3 has a plate shape, and wherein it is configured so that the plurality of strands is butt-connected to an end face of the conductor, the plurality of strands having a same plate shape as the end face 30 of the conductor in advance. This enables the electric wire to be connected to the end face 30 of the conductor by configuring the plurality of strands constituting the electric wire in the same plate shape as the end face of the conductor in advance. This may enable the miniaturization in the height direction.

## Description

### BACKGROUND OF THE INVENTION

### Technical Field

The present invention relates to a conductor connecting structure.

### Background Art

An automobile is equipped with various types of electronic devices, wherein wire harnesses are arranged therein in order to transfer e.g. electric power and/or control signals to such electronic devices. A wire harness includes a plurality of electric wires and a connector, wherein the wire harness is connected to an electronic device or another wire harness by mating this connector to a connector of the electronic device or of the other wire harness.

Generally, an electric wire with a terminal constituting such a wire harness includes an electric wire and a terminal device to be mounted to an end of the electric wire (see e.g. Patent Document 1).

Patent Document 1 discloses an electric wire with a terminal which is produced by jointing the electric wire to a male terminal as a terminal device via ultrasound. The male terminal includes an inserted element and an electric wire joint section, wherein the inserted element is configured to be inserted into a female terminal by means of a belt-shaped metal plate, and the electric wire joint section is configured for jointing the electric wire thereto. The electric wire joint section is formed by bending it in a direction orthogonal to an extending direction of the inserted element. For such an electric wire, when a core section of the electric wire should be jointed to the electric wire joint section of the male terminal, a tip end face of the core section of the electric wire is pressed against the electric wire joint section of the male terminal, and an ultrasound vibration is applied to an interface between the electric wire joint section and the tip end face of the core section to joint them via ultrasound by means of atomic bonding. In this manner, the core section of the electric wire is jointed to the electric wire joint section of the male terminal.

### Citation List

### Patent Literature

Patent Document 1: JP 2014-207108 A

### SUMMARY OF THE INVENTION

However, for a conventional electric wire with a terminal, the electric wire joint section of the terminal is formed by bending it in a height direction orthogonal to an extending direction of the inserted element. This results in an increase in size by an extension of the height dimension.

An objective of the present invention is to provide a conductor connecting structure which may enable miniaturization in the height direction.

In order to achieve the objective, the invention according to claim 1 provides a conductor connecting structure for connecting a conductor to an electric wire with a plurality of strands, wherein the conductor has a plate shape, and wherein it is configured so that the plurality of strands is butt-connected to an end face of the conductor, the plurality of strands having a same plate shape as the end face of the conductor in advance.

The invention according to claim 2 provides the conductor connecting structure according to claim 1, wherein the end face of the conductor has a rectangular shape having a width which is larger than its thickness by a factor of between 1 and 8.

The invention according to claim 3 provides the conductor connecting structure according to claim 1 or 2, wherein the conductor is configured with a plurality of thin plates which are stacked.

According to claim 1, the conductor has a plate shape, and it is configured so that the plurality of strands is butt-connected to an end face of the conductor, the plurality of strands having a same plate shape as the end face of the conductor in advance. This enables the electric wire to be connected to the end face of the conductor by configuring the plurality of strands constituting the electric wire in the same plate shape as the end face of the conductor in advance without having to bending the electric wire joint section of the terminal in the direction orthogonal to the extending direction of the inserted element as conventionally. This may enable the miniaturization in the height direction.

### BRIEF DESCRIPTION OF THE DRAWINGS

Fig.1 is a perspective view of an electric wire with a conductor with a conductor connecting structure according to an embodiment of the present invention applied;
Fig.2 shows tip end faces of a plurality of strands constituting the electric wire in (A), and a conceptual view of an end face of the conductor in (B);
Fig. 3 is a perspective view of a configuration of the conductor; and
Fig.4 is a view for explaining effects of the present invention, wherein a table is presented which shows connection availability, mechanical strength and conductivity performance for different width-height ratios of a connecting portion between the plurality of strands and the conductor.

### DETAILED DESCRIPTION OF THE PREFERRED EMBODIMENTS

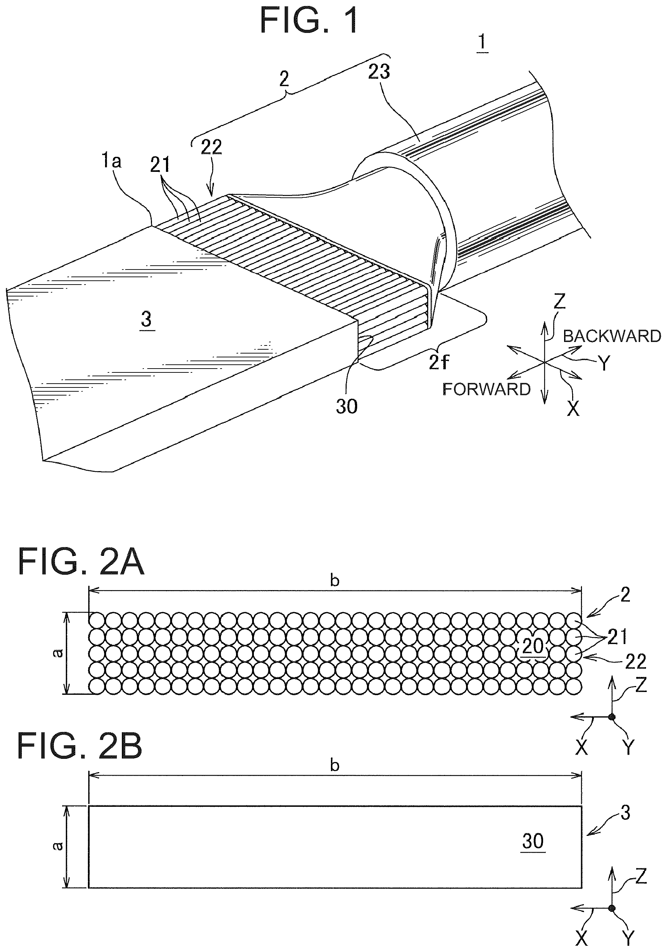

Hereinafter, an embodiment of the present invention will be described with reference to Figs.1 to 4. Fig.1 shows a perspective view of an electric wire with a conductor to which a conductor connecting structure according to an embodiment of the present invention is applied. The electric wire with the conductor 1 according to the present embodiment has the conductor connecting structure applied, wherein the electric wire 1 constitutes a wire harness to be arranged e.g. in an automobile.

As shown in Fig.1, the electric wire 1 includes a coated electric wire 2 (hereinafter referred to as "electric wire 2") and the conductor 3. According to the present embodiment, a direction in which the electric wire 2 and the conductor 3 are aligned is designated by an arrow Y, a direction (up-down direction) orthogonal to (intersecting) the arrow Y is designated by an arrow Z, and a direction (right-left direction) orthogonal to both of the arrow Y and the arrow Z is designated by an arrow X. Further, the conductor 3 side may be referred to as "forward" and/or "front", while the electric wire 2 side opposed thereto may be referred to as "backward" and/or "back".

As shown in Fig.1, the electric wire 2 includes a bundle of cores 22 as a bundle of linear strands 21 having a conductivity, and a coating section 23 for applying an insulating coating to the bundle of cores 22. For this electric wire 2, the bundle of cores 22 is exposed by stripping off the coating section 23 at a front end portion 2f of the electric wire 2.

As shown in Fig.2(A), the bundle of cores 22 is formed by jointing multiple strands 21 via ultrasound and thus jointing the strands 21 to each other. Further, in a ultrasound-jointed state, the bundle of cores 22 is configured so as to have a same shape as an end face 30 of the conductor 3 as described below. The bundle of cores 22 according to the present embodiment has a plate shape with a rectangular cross section, having a width b (arrow X) which is larger than its height a (arrow Z) by a factor of 8. Further, the tip end faces 20 of the bundle of cores 22 is configured to be positioned in a ZY-plane which is orthogonal to a forward-backward direction (direction of an arrow Y), as shown in Fig.2(A). The tip end faces 20 of the bundle of cores 22 come into contact with the end face 30 of the conductor 3 to electrically connect (butt-connect) the bundle of cores 22 to the conductor 3.

Here, the wording "butt-connection" means a condition where the tip end faces 20 of the bundle of cores 22 are pressed against the end face 30 of the conductor 3 so that the conductor 3 and the bundle of cores 22 are electrically connected to each other, as shown in Fig.1. A connecting portion 1a (shown in Fig.1) between the bundle of cores 22 and the conductor 3 may be jointed by means of melting or welding in order to maintain an electrically connected state between the bundle of cores 22 and the conductor 3.

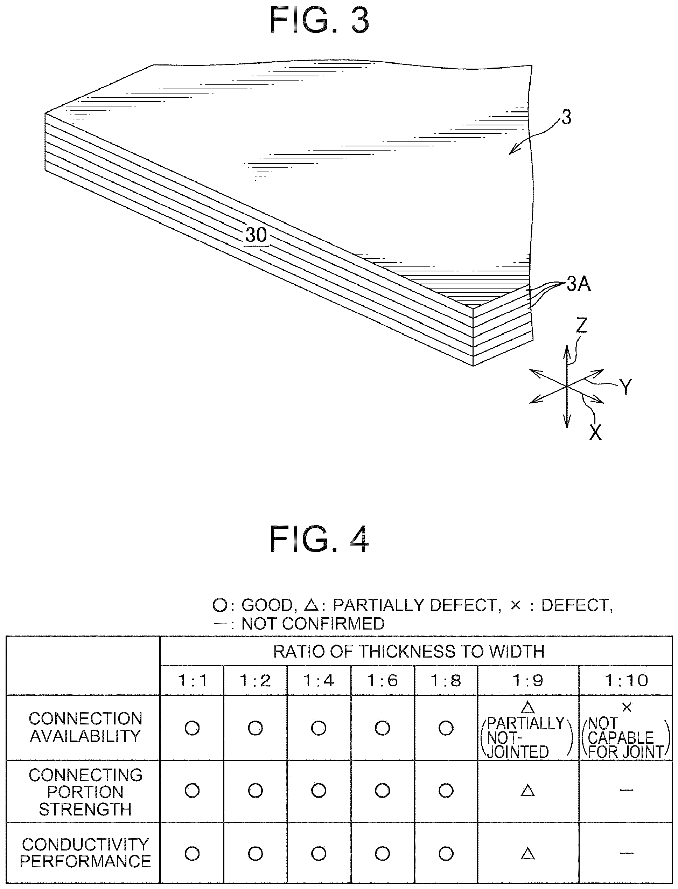

The conductor 3 consists of metal having a conductivity. As shown in Fig.3, the conductor 3 includes six (a plurality of) thin plates 3A which are stacked (it may be a bus bar). Further, the conductor 3 has a plate shape with a width b (arrow X) which is larger than its height a (thickness, arrow Z) by a factor of 8, as shown in Fig.2(B). It is to be noted that in Fig.2(B), the thin plates 3A are omitted from the conductor 3, and a general shape of the conductor 3 is shown conceptually.

For this conductor 3, its end face 30 to be connected to the bundle of cores 22 extends in the ZX-plane orthogonal to the forward-backward direction (arrow Y) so that the end face 30 is opposed to the tip end faces 20 of the bundle of cores 22, as shown in Fig.2(B). Further, the end face 30 of the conductor 3 has a plate shape with a rectangular cross section, having a width b (arrow X) which is larger than its height a (arrow Z) by a factor of 8, as shown in Fig.2(B). Although the conductor 3 according to the present embodiment consists of a plurality of thin plates 3A, it is to be noted that the conductor 3 may consist of a single metal sheet (bus bar).

Such an electric wire 1 with the conductor is assembled according to the following procedure. First, for the electric wire 2, the coating section 23 is stripped off at the front end portion 2f of the electric wire 2 to expose the multiple strands 21, as shown in Fig.1. Subsequently, the strands 21 are jointed via ultrasound, wherein the strands 21 are configured in a plate shape having a rectangular cross section and a width b (arrow X), wherein the width b is larger than the height a (arrow Z) by a factor of 8, whereby the bundle of cores 22 is formed. At this time, the tip end faces 20 of the bundle of cores 22 are formed so as to have a substantially same shape as the end face 30 of the conductor 3. Then, the tip end faces 20 of the bundle of cores 22 are butt-connected to the end face 30 of the conductor 3. In this manner, the electric wire 2 is electrically connected to the end face 30 of the conductor 3 to produce the complete electric wire 1 with the conductor.

According to the embodiment as described above, the conductor 3 has a plate shape, and it is configured so that the plurality of strands 21 is butt-connected to an end face 30 of the conductor 3, the plurality of strands having a same plate shape as the end face 30 of the conductor 3 in advance. This enables the electric wire 2 to be connected to the end face 30 of the conductor 3 by configuring the plurality of strands 21 constituting the electric wire 2 in the same plate shape as the end face 30 of the conductor 3 in advance. This may enable the miniaturization in the height direction.

Further, the conductor 3 is configured with the plurality of thin plates 3A which are stacked. This enables the conductor 3 to have a desired thickness by varying the number of thin plates 3A.

The inventors of the present invention confirmed the effects of the present invention for different ratios of the width b (arrow X) to the height a (arrow Z) for the connecting portion 1a between the bundle of cores 22 and the conductor 3 (the tip end faces 20 of the bundle of cores 22 and the end face 30 of the conductor 3). Fig.4 shows the results. In Fig.4, "○" indicates "good (passed)", "Δ" indicates "partially defect (failed)", "×" indicates "defect (failed)", and "-" indicates "not confirmed". According to Fig.4, in the case of a ratio between 1 : 1 and 1 : 8 of the width b to the height a for the connecting portion 1a between the bundle of cores 22 and the conductor 3, it turned out to be "good" in all of the connection availability, connecting portion strength and conductivity performance, in the case of a ratio of 1 : 9, it turned out to be "partially defect (partially non-jointed)" in all of the connection availability, connecting portion strength and conductivity performance, and in the case of a ratio of 1 : 10, it turned out to be "defect (not capable for joint)" or "not confirmed". In this manner, it was confirmed that in the case of a ratio between 1 : 1 and 1 : 8 of the width b to the height a for the connecting portion 1a between the bundle of cores 22 and the conductor 3, the result is "good" in all of the connection availability, connecting portion strength and conductivity performance.

In this manner, it is possible to ensure a good connectivity, conductivity performance and connected portion strength by the end face 30 of the conductor 3 which has a rectangular shape with the width b (arrow X) being larger than the height a (thickness, arrow Z) by a factor between 1 and 8.

It is to be noted that the present invention is not limited to the above-described embodiment, but includes other embodiments which can achieve the objective of the present invention, wherein the present invention also includes variations as described below.

According to the above-described embodiment, the tip end faces 20 of the bundle of cores 22 as well as the end face 30 of the conductor 3 have a rectangular shape. However, their shapes are not limited thereto. It may include an elliptical shape with a width (arrow X) being larger than a height (arrow Z).

Although the best configuration, method etc. for implementing the present invention are disclosed in the above description, the present invention is not limited thereto. Namely, while the present invention is particularly shown and described mainly with regard to the specific embodiments, the above mentioned embodiments may be modified in various manners in shape, material characteristics, amount or other detailed features by those skilled in the art without departing from the scope of the technical idea and purpose of the present invention. Therefore, the description with limited shapes, material characteristics etc. according to the above disclosure is not limiting the present invention, but merely illustrative for easier understanding the present invention so that the description using names of the elements without a part or all of the limitations to their shapes, material characteristics etc. is also included in the present invention.

### Reference Signs List

- 1: Electric wire with a conductor (conductor connecting structure)
- 2: Electric wire
- 21: Strands
- 3: Conductor
- 30: End face of the conductor

## Claims

1. A conductor connecting structure for connecting a conductor to an electric wire with a plurality of strands,
wherein the conductor has a plate shape, and
wherein it is configured so that the plurality of strands is butt-connected to an end face of the conductor, the plurality of strands having a same plate shape as the end face of the conductor in advance.

2. The conductor connecting structure according to claim 1,
wherein the end face of the conductor has a rectangular shape having a width which is larger than its thickness by a factor of between 1 and 8.

3. The conductor connecting structure according to claim 1 or 2,
wherein the conductor is configured with a plurality of thin plates which are stacked.
